# EUROPÄISCHE PATENTANMELDUNG

(11) **EP 3 795 373 A1**
(43) Veröffentlichungstag der Anmeldung: **24.03.2021**
(21) Anmeldenummer: 19198381.6
(22) Anmeldetag: 19.09.2019
(51) Int. Cl.: B60B 29/00, B23P 19/00, B25J 19/04, B25B 23/04

(54) **VORRICHTUNG ZUM AUTOMATISCHEN WECHSELN VON FAHRZEUG- ODER FLUGZEUGRÄDERN**

(71) Anmelder: Mees, Thoralf, 80333 München (DE)
(72) Erfinder: Mees, Thoralf, 80333 München (DE)
(74) Vertreter: Keilitz, Wolfgang

(57) **Zusammenfassung**

Die Erfindung betrifft eine Vorrichtung zum automatischen Wechseln von Fahrzeug- oder Flugzeugrädern (15), umfassend eine mobile Schraubereinheit (2) mit: Einer Basis, an der mehrere Räder (5) befestigt sind, einer Antriebseinheit (17) zum Antreiben der Räder (5), einem auf der Basis montierten Schrauber (3) mit einer Klinge (7), einer Stelleinrichtung, mit der die Position des Schraubers (3) in horizontaler und vertikaler Richtung relativ zur Basis einstellbar ist, einer Kassette (6) zum Aufnehmen von Befestigungselementen (14), mit denen die Fahrzeug- oder Flugzeugräder (15) befestigt sind, wobei die Kassette (6) eine Öffnung (11) aufweist, durch die die Klinge (7) des Schraubers (3) hindurchragt, und die so dimensioniert ist, dass ein Befestigungselement (14) von außen in die Kassette (6) eingeführt oder aus der Kassette (6) ausgestoßen werden kann, einer Kamera (8) und einer Bilderkennungssoftware, mit der die Position der Befestigungselemente (14) erkennbar ist, und einer Steuerung (4), die dazu eingerichtet ist, den Schrauber (3) anzusteuern und die horizontale sowie vertikale Position in den Achsen x, y und z des Schraubers (3) relativ zur Basis einzustellen.

## Beschreibung

Die Erfindung betrifft eine Vorrichtung zum automatischen Wechseln von Fahrzeug- oder Flugzeugrädern mit einer automatisch arbeitenden Schraubereinheit.

### HINTERGRUND DER ERFINDUNG

Das Wechseln von Fahrzeug- oder Flugzeugreifen erfolgt heute in der Regel von Hand und setzt bisher einen manuell bedienten Fahrzeug- bzw. Flugzeugheber oder eine Hebebühne voraus. Fahrzeugreifen können mit bis zu sechs Schrauben oder Muttern an der Nabe befestigt sein. Jede Schraube bzw. Mutter muss einzeln manuell mittels eines Schlagschraubers gelöst und nach dem Wechseln des Rades wieder befestigt werden. Flugzeugreifen sind meist nur mit einer einzigen Mutter an der Achse/Nabe befestigt. Erschwerend kommt hier allerdings hinzu, dass die Muttern meist mittels einer Sicherung gegen unbeabsichtigtes Herausdrehen gesichert sind. Zusätzlich dazu ist durch die hohen Belastungen, Korrosion etc. auch eine Veränderung der Befestigungselemente (Radbolzen, Muttern etc.) festzustellen. Dies erschwert das Lösen der Befestigungselemente und auch das Erkennen. Außerdem sind viele Flugzeugräder (bis zu 250 kg pro Stück) so schwer, dass sie nur mit maschineller Unterstützung angehoben und nur von mehreren Mitarbeitern auf die Nabe aufgesetzt werden können. Das Wechseln von Fahrzeug- oder Flugzeugreifen ist daher relativ zeitaufwändig, anstrengend und in höchstem Maße sicherheitsrelevant.

### AUFGABE DER ERFINDUNG

Es ist daher eine Aufgabe der vorliegenden Erfindung, ein System zu schaffen, mit dem Fahrzeug- oder Flugzeugräder zumindest teilautomatisiert und daher mit deutlich geringerem menschlichen Arbeitseinsatz gewechselt werden können. Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird eine Vorrichtung zum Wechseln von Fahrzeug- oder Flugzeugrädern vorgeschlagen, die eine mobile, automatisch arbeitende Schraubereinheit umfasst, welche folgende Komponenten aufweist:
Eine Basis, an der mehrere Räder bzw. Rollen befestigt sind, mit denen sich die Schraubereinheit über den Boden bewegt, eine Antriebseinheit zum Antreiben der Räder, einen auf der Basis montierten Schrauber mit einer Klinge, eine Stelleinrichtung, mit der die Position des Schraubers in horizontaler und vertikaler Richtung (also in den Achsen x, y, und z) relativ zur Basis eingestellt werden kann, eine Kassette zum Aufnehmen von Befestigungselementen, mit denen das Fahrzeug- oder Flugzeugrad befestigt ist, wobei die Kassette eine Öffnung aufweist, durch die die Klinge des Schraubers hindurchragt und die so dimensioniert ist, dass ein Befestigungselement von außen in die Kassette eingeführt oder aus der Kassette ausgestoßen werden kann, eine Kamera und eine Bilderkennungssoftware, mit der die Position der Befestigungselemente (bei einem Rad, das angeschraubt ist) oder der Befestigungsort erkennbar ist, und eine Steuerung, die dazu eingerichtet ist, den Schrauber zu betätigen und dessen horizontale sowie vertikale Position einzustellen.

Befestigungselemente können je nach Ausführung der Radbefestigung z. B. Radmuttern, -schrauben oder -bolzen sein.

Die erfindungsgemäße Vorrichtung umfasst vorzugsweise auch eine Radwechseleinheit, die dazu ausgelegt ist, ein Fahrzeug- oder Flugzeugrad nach dem Lösen des/der Befestigungselemente von der der Nabe abzunehmen und zur Seite weg zu bewegen, und die im gleichen Zuge das neue Rad an der Nabe positioniert und auf die Nabe setzt. Die Radwechseleinheit hat zu diesem Zweck mehrere Aufnahmen für Fahrzeug- oder Flugzeugräder und ist in der Lage, sich um eine horizontale Achse zu drehen.

Zum Wechseln eines Fahrzeug- oder Flugzeugrades wird die Schraubereinheit zunächst durch Antreiben der Räder seitlich am zu wechselnden Rad positioniert, das noch auf der Nabe angeordnet ist. Außerdem wird ein Wagen- oder Flugzeugheber positioniert und das Fahrzeug oder Flugzeug angehoben. Anschließend werden Rad-Transportwagen am alten und neuen Rad positioniert. Danach wird der Schrauber in die richtige Position gebracht, so dass ein Befestigungselement gelöst werden kann. Abgeschraubte Befestigungselemente werden in der Kassette gesammelt. Zum Anschrauben eines Rades wird das Befestigungselement mithilfe der Klinge und den Positionierungsmotoren des Schraubers aus der Kassette ausgestoßen und dann am entsprechenden Gegenstück festgeschraubt. Eine solche Vorrichtung hat somit den Vorteil, dass ein Fahrzeug- oder Flugzeugrad vollautomatisch abgeschraubt oder angeschraubt werden kann. Neben der Einsparung manueller Arbeit kann der gesamte Vorgang auch deutlich schneller und somit für die Mitarbeiter auch schonender ausgeführt werden als bisher.

Zum Verstellen der relativen Position des Schraubers können beispielsweise eine oder mehrere Motor-Getriebe-Einheiten vorgesehen sein. Jede Motor-GetriebeEinheit kann zum Beispiel einen Spindeltrieb umfassen, der von einem Elektromotor, insbesondere einem Schrittmotor, angetrieben wird.

Beim An- oder Abschrauben eines Rades müssen in der Regel hohe Druckkräfte auf das betreffende Befestigungselement ausgeübt werden, die verhindern, dass das Werkzeug vom Befestigungselement abrutscht. Um die Druckkräfte aufnehmen zu können, umfasst die erfindungsgemäße Schraubereinheit vorzugsweise eine Fixiervorrichtung, mit der sie relativ zum Boden fixiert werden kann. Die genannte Fixiervorrichtung kann beispielsweise einen Arm umfassen, der an einem Fixpunkt, wie zum Beispiel am Fahrzeug, am Boden oder an einem anderen Fixpunkt angreift und die Schraubereinheit in Position hält. Die Fixiervorrichtung kann wahlweise auch als eine Vorrichtung zum Blockieren der Räder der Schraubereinheit ausgeführt sein. Alternativ könnte die Schraubereinheit beispielsweise auch am Boden abgesetzt werden, bevor der Radwechsel durchgeführt wird.

Gemäß einer Ausführungsform der Erfindung ist an einem Endabschnitt der Klinge eine Haltevorrichtung zum Halten eines Befestigungselements vorgesehen, die verhindert, dass das Befestigungselement nach dem Lösen oder beim Vorgang des Festschraubens herunterfällt.

Die vorstehend genannte Haltevorrichtung kann beispielsweise als ein elastisches Element ausgebildet sein. Das elastische Element ist vorzugsweise so dimensioniert, dass es über den Kopf der Schraube - oder wenn das Rad mittels Muttern befestigt ist - über die Mutter gestülpt werden kann und an einer Rückseite der Schraube bzw. Mutter eingreift. Wahlweise kann die Haltevorrichtung auch als eine Klammer ausgebildet sein oder über elektromagnetische Elemente aktiv angesteuert werden.

Gemäß einer Ausführungsform der Erfindung ist auch ein Abstreifer vorgesehen, mit dem ein vom Schrauber gehaltenes Befestigungselement von der Klinge abgestreift werden kann. Bei dem Abstreifer kann es sich im einfachsten Fall um einen Anschlag, wie z.B. einen dornförmigen Fortsatz oder ein vorstehendes Blech handeln, das gegen das Befestigungselement drückt und dieses aus der Haltevorrichtung löst.

Die erfindungsgemäße Vorrichtung kann auch einen oder mehrere Wagen zum Transportieren oder Positionieren von Fahrzeug- oder Flugzeugreifen umfassen. Jeder Wagen hat vorzugsweise mehrere Räder, die motorisch angetrieben werden. Die Ansteuerung der Wagen erfolgt vorzugsweise durch die Schraubereinheit.

Jeder Transportwagen umfasst vorzugsweise eine Tragevorrichtung zum Tragen eines Rades. Die Tragevorrichtung ist vorzugsweise in vertikaler Richtung verstellbar, so dass ein darauf liegendes Rad angehoben oder abgesenkt werden kann.

Gemäß einer speziellen Ausführungsform der Erfindung umfasst die Tragevorrichtung zwei im Abstand zueinander angeordnete Arme, auf denen das Rad aufliegt. Das Rad wird dabei vorzugsweise nur vorne bzw. hinten, in Laufrichtung betrachtet, gehalten.

Bei der Montage eines Fahrzeug- oder Flugzeugrades ist es erforderlich, das Lochmuster des Rades mit dem entsprechenden Lochmuster der Nabe in Übereinstimmung zu bringen. Die vorstehend genannten Transportwagen umfassen zu diesem Zweck jeweils eine Vorrichtung zum Drehen des transportierten Rades um seine Achse. Gemäß einer Ausführungsform der Erfindung können an dem vorstehend genannten Armen jeweils eine oder mehrere Rollen vorgesehen sein. Wenigstens eine der Rollen wird vorzugsweise von einem Antrieb, wie z. B. einem Elektromotor, angetrieben. Um die richtige Position zu erkennen, kann der Wagen eine eigene Sensorik, wie zum Beispiel ein Bilderfassungssystem aufweisen. Gemäß einer bevorzugten Ausführungsform wird die Position des Lochkreises aber mittels der Bilderkennungseinheit der Schraubereinheit erkannt. Die im Wagen integrierte Vorrichtung zum Drehen des Rades wird dann vorzugsweise von der Steuereinheit der Schraubereinheit angesteuert.

Wie bereits dargelegt, ist der Schrauber über entsprechende Stelleinrichtungen in allen drei Raumachsen verstellbar. Eine Stelleinrichtung kann beispielsweise als ein einfacher Spindeltrieb ausgeführt sein. Der Schrauber kann aber auch auf einem Schlitten geführt oder anderweitig gleitend gelagert sein. Als Antrieb einer Stelleinrichtung ist vorzugsweise ein Elektromotor vorgesehen.

Die Kassette ist so dimensioniert, dass sie vorzugsweise mehrere Befestigungselemente aufnehmen kann. Innerhalb der Kassette sind die Befestigungselemente vorzugsweise in einer oder mehreren Spalten (Reihen) nebeneinander oder mit horizontalem Versatz untereinander angeordnet. Am Boden der Kassette ist vorzugsweise ein Bodenelement vorgesehen, das beweglich in der Kassette angeordnet ist. Das Bodenelement wird vorzugsweise von einer Feder in vertikaler Richtung nach oben gedrückt, so dass das oberste Befestigungselement in der Öffnung der Kassette zum liegen kommt und von der Klinge des Schraubers durch die Öffnung ausgestoßen werden kann.

Die üblicherweise verwendeten Radschrauben haben einen schmaleren Gewindeabschnitt und einen breiteren Kopf. Sie würden daher, wenn mehrere Radschrauben übereinander gestapelt sind, schräg in der Kassette liegen. Um die Radschrauben im Wesentlichen horizontal auszurichten, sind an der Innenseite der Kassette im Bereich der Gewindeabschnitte der Radschrauben vorzugsweise mehrere Abstandshalter vorgesehen, auf denen die Gewindeabschnitte der Radschrauben jeweils zu liegen kommen. Die Köpfe der Schrauben liegen in der Kassette vorzugsweise direkt aufeinander.

Die vorstehend genannten Wagen zum Transportieren der Fahrzeug- oder Flugzeugräder haben vorzugsweise eine Auflagefläche, auf der das Fahrzeug- oder Flugzeugrad aufliegt, wenn es transportiert wird. Gemäß einer speziellen Ausführungsform der Erfindung kann die Auflagefläche zwei gegenüberliegende, geneigte Seitenflächen aufweisen, die nach unten aufeinander zu verlaufen. Dadurch wird erreicht, dass das Rad in seiner Axial- bzw. Querrichtung fixiert wird, wenn es auf dem Wagen liegt. Alternativ oder zusätzlich können auch andere Fixier- oder Klemmeinrichtungen vorgesehen sein, die das Rad in Querrichtung fixieren. So können beispielsweise seitliche Platten oder anders geformte Elemente vorgesehen sein, die in Querrichtung beweglich sind und das Rad fixieren können. Das bewegliche Element der Fixiereinrichtung kann auch nur auf einer Seite des Rades vorgesehen sein. Auf der anderen Seite kann das Rad z.B. einfach gegen einen Anschlag, wie z.B. eine Wand, gedrückt werden.

Das erfindungsgemäße Radwechselsystem kann auch einen Wagenheber aufweisen, der dazu ausgelegt ist, sich automatisch an einem Fahrzeug oder Flugzeug zu positionieren und das Fahrzeug oder Flugzeug ggf. automatisch anzuheben oder abzusenken.

Die erfindungsgemäße Vorrichtung umfasst vorzugsweise auch eine Steuereinheit, mit der die Rad-Transportwagen positioniert oder betätigt werden können. Außerdem kann eine Steuereinheit vorgesehen sein, mit der der Wagen- oder Flugzeugheber positioniert und betätigt werden kann,

### KURZE BESCHREIBUNG DER ZEICHNUNGEN

Die Erfindung wird nachstehend anhand der beigefügten Zeichnungen beispielhaft näher erläutert. Es zeigen:
Fig. 1 eine seitliche Schnittansicht einer Schraubereinheit zum Wechseln von Fahrzeug- oder Flugzeugrädern gemäß einer Ausführungsform der Erfindung;
Fig. 2 eine Außenansicht der Schraubereinheit von Fig. 1 beim Abschrauben eines Fahrzeugrades;
Fig. 3 eine perspektivische Ansicht eines Wagens zum Transportieren von Fahrzeug- oder Flugzeugrädern;
Fig. 4 eine Ansicht einer Kassette zum Sammeln von Befestigungselementen; und
Fig. 5 eine seitliche Schnittansicht der Kassette von Fig. 4 mit mehreren darin enthaltenen Radschrauben.

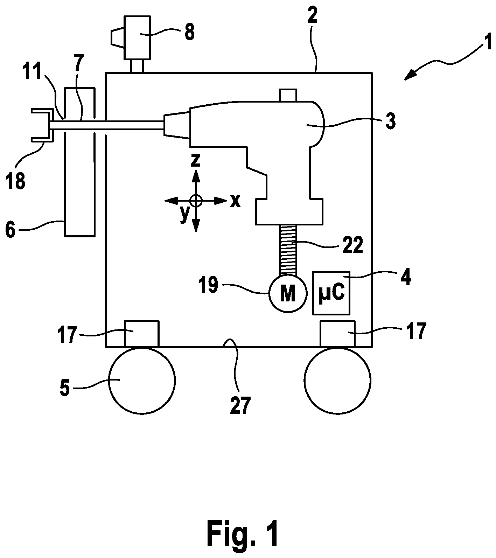

Fig. 1 zeigt eine Schraubereinheit 2 zum Wechseln von Fahrzeug- oder Flugzeugrädern 15. Die Schraubereinheit 2 hat eine Basis 27, an der mehrere Räder 5 befestigt sind sowie eine Antriebseinheit 17 zum Antreiben der Räder 5. Die Schraubereinheit 2 ist derart ausgelegt, dass sie sich automatisch über den Boden bewegt und an einem zu wechselnden Fahrzeug- oder Flugzeugrad 15 positioniert. Die richtige Position kann z. B. zuvor gelernt worden sein. Die Feineinstellung der Position kann z. B. mittels Bildererkennung oder einer anderen Sensorik erfolgen.

Innerhalb der Schraubereinheit 2 befindet sich ein Schrauber 3 mit einer Klinge 7 zum An- oder Abschrauben von Befestigungselementen 14, mit denen das Fahrzeug- oder Flugzeugrad 15 an der zugehörigen Radnabe befestigt ist. Am freien Ende der Klinge 7 befindet sich ein Werkzeug 18, wie z.B. eine (Steck)nuss.

Der Schrauber 3 ist in allen drei Raumachsen x, y, z relativ zur Basis 27 der Schraubereinheit 2 verstellbar und kann somit in die für das An- oder Abschrauben des Rades 15 erforderliche Position gebracht werden. Zur Positionierung des Schraubers 3 können verschiedene Stelleinrichtungen vorgesehen sein, in einem einfachen Fall, wie dargestellt, kann die Stelleinrichtung einen Spindeltrieb umfassen, der einen Elektromotor 19 und eine Spindel 22 aufweist. Alternativ könnte die Stelleinrichtung auch einen Schlitten und einen Seilzug oder dergleichen aufweisen. Der Antrieb der Stelleinrichtung umfasst vorzugsweise einen Schrittmotor.

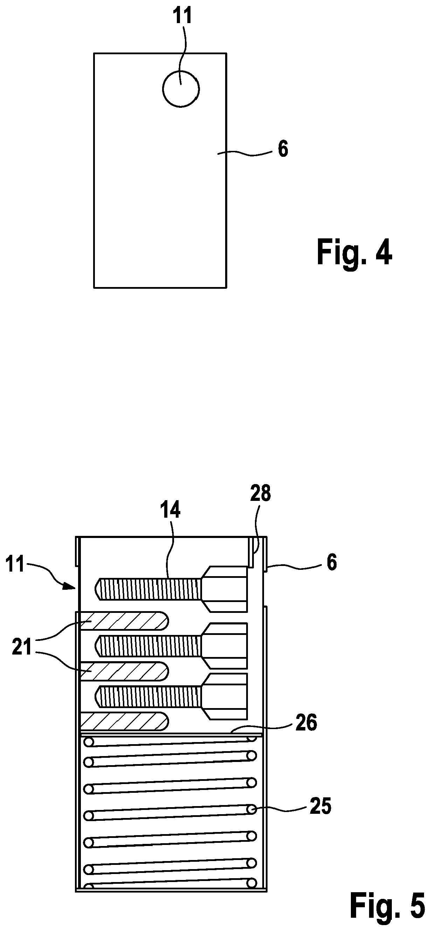

Die in Fig. 1 dargestellte Schraubereinheit 2 umfasst ferner eine Kassette 6 zum Aufnehmen mehrerer Befestigungselemente 14 (siehe Fig. 5). Die Kassette hat eine Öffnung 11, durch die die Klinge 7 des Schraubers 2 hindurch ragt, wobei die Öffnung so dimensioniert ist, dass ein Befestigungselement 14 von außen in die Kassette eingeführt oder aus der Kassette 6 ausgestoßen werden kann. Die Kassette 6 ist an einer Vorderseite der Schraubereinheit 2 befestigt.

Die dargestellte Schraubereinheit 2 umfasst ferner eine Kamera 8 und eine Bilderkennungssoftware, mit der die Position der Befestigungselemente 14 - bzw. wenn das Rad 15 noch nicht festgeschraubt ist, der Ort der Befestigung (wie z.B. die Radnabe) - erkennbar ist. Außerdem ist eine Steuereinheit 4 vorgesehen, die dazu eingerichtet ist, den Schrauber 3 zu betätigen und dessen horizontale oder vertikale Position in 3 Raumachsen einzustellen. Die Steuereinheit 4 kann auch dazu vorgesehen sein, die gesamte Schraubereinheit 2 zu bewegen oder einen anderen Antrieb anzusteuern, oder beliebige andere Funktionen auszuführen, die im Rahmen eines Radwechsels erforderlich sind.

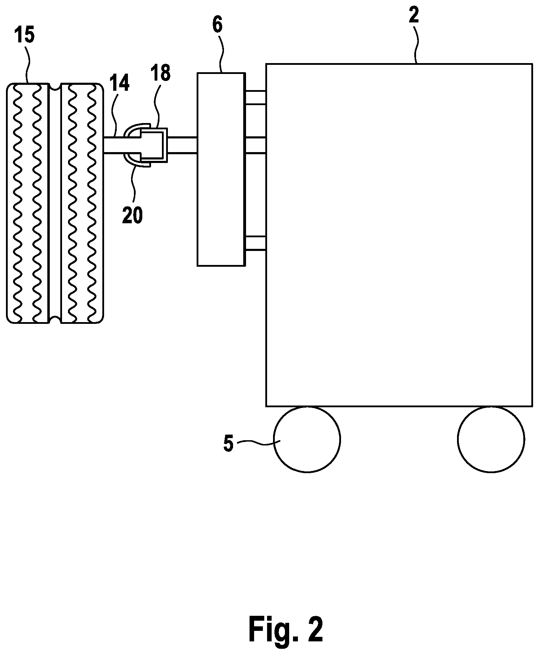

Zum Wechseln eines Rades 15 wird die Schraubereinheit 2 zunächst am zu wechselnden Fahrzeug- oder Flugzeugrad 15 (siehe Fig. 2) positioniert. Dies erfolgt vorzugsweise automatisch, z.B. über Bilderkennung oder einen Geotag, den die Schraubereinheit 2 automatisch anfährt. Sobald die Schraubereinheit 2 nahe am Rad 15 positioniert ist, wird sie vorzugsweise mit einer Fixiereinrichtung (nicht gezeigt) relativ zum Boden fixiert. Dadurch wird verhindert, dass die Schraubereinheit 2 beim An- oder Abschrauben eines Rades 15 vom Rad 15 weggedrückt wird und das Werkzeug des Schraubers 3 vom Befestigungselement 14 abrutscht. Als Fixiervorrichtung kann beispielsweise ein Arm vorgesehen sein (nicht gezeigt), der an einem Fixpunkt, wie z.B. am Fahr-/Flugzeug, am Rad 15, am Boden oder an einem anderen Fixpunkt angreift und die Schraubereinheit 2 in Position hält. Nach dem Positionieren und Fixieren der Schraubereinheit 2 wird der Schrauber 3 über die einzelnen Stelleinrichtungen 19, 22 in die richtige Position gebracht, so dass ein Befestigungselement 14 gelöst oder festgeschraubt werden kann.

Um zu verhindern, dass ein vom Schrauber 3 betätigtes Befestigungselement 14 aus dem Werkzeug 18 herausrutscht und auf den Boden fällt, ist hier eine Haltevorrichtung 20 zum Halten der Befestigungselemente 14 vorgesehen. In der in Fig. 2 dargestellten Ausführungsform der Erfindung ist die Haltevorrichtung 20 als ein ringförmiges, elastisches Element ausgebildet, das am Werkzeug 18 befestigt ist und dabei so dimensioniert ist, dass es über den Kopf des Befestigungselements 14 gedrückt werden kann und das Befestigungselement 14 teilweise umgreift.

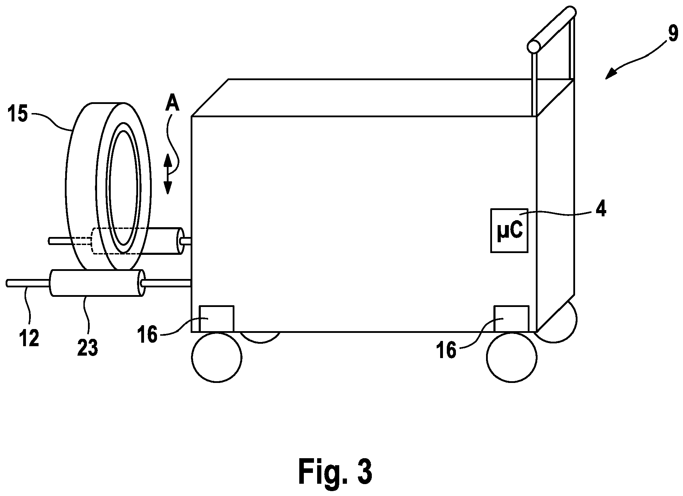

Fig. 3 zeigt eine Ausführungsform eines Wagens 9 zum Transportieren und/oder Positionieren von Fahrzeug- oder Flugzeugreifen 15. Der Transportwagen 9 umfasst mehrere Räder 5, mit denen sich der Wagen 9 über den Boden bewegen kann. Zum Antreiben der einzelnen Räder 5 sind elektrische Antriebe 16 vorgesehen.

Der Wagen 9 umfasst im dargestellten Ausführungsbeispiel zwei parallele Arme 12, die im Abstand zueinander angeordnet sind. Der Abstand der Arme 12 ist dabei so gewählt, dass Räder 15 unterschiedlicher Größe darauf liegen können. Auf jedem der Arme 12 ist eine Rolle 23 angeordnet, so dass ein darauf liegendes Rad 15 um seine Achse rotiert werden kann. Dies ist erforderlich, um das Lochmuster des Rades 15 mit dem entsprechenden Lochmuster der Nabe in Übereinstimmung zu bringen. Wenigstens eine der Rollen wird vorzugsweise von einem Antrieb, wie z. B. einem Elektromotor, angetrieben.

Zum Anheben oder Absenken eines transportierten Rades 15 können die Arme 12 mittels einer Hubvorrichtung nach oben bzw. unten in Richtung des Pfeils A bewegt werden. Der Hubmechanismus kann in bekannter Weise ausgeführt sein.

Der Transportwagen 9 umfasst vorzugsweise auch eine Sensorik (nicht dargestellt), wie z.B. ein Bilderfassungssystem, mit dem die Position des Lochkreises bestimmt und eine Übereinstimmung mit dem Lochkreis der Nabe erkannt werden kann. Die Steuerung der einzelnen Antriebe des Wagens 9 erfolgt mittels einer Steuervorrichtung 4.

Fig. 4 zeigt eine Ansicht einer Kassette 6 von außen, wobei die Öffnung 11 zum Ausstoßen bzw. Einführen von Befestigungselementen 14 gut zu erkennen ist.

Fig. 5 zeigt schließlich noch eine seitliche Schnittansicht der Kassette 6 mit mehreren darin enthaltenen Radschrauben. Die Radschrauben bzw. Befestigungselemente 14 können in einer oder mehreren Reihen (Spalten) nebeneinander angeordnet sein, wobei jede Reihe mehrere übereinander liegende Befestigungselemente 14 umfasst. Um den Querschnittunterschied zwischen dem Gewindeabschnitt und dem Kopfabschnitt der Radschrauben auszugleichen, sind an der Innenseite der Kassette 6 mehrere Abstandshalter 21 angeordnet. Außerdem ist ein Abstreifer 28, wie z.B. ein Dornfortsatz oder ansteuerbare Elektromagneten, vorgesehen, mittels dessen das Befestigungselement wie z.B. die Radschraube vom Werkzeug 18 abgestreift wird. In der Kassette 6 befindet sich ferner ein in vertikaler Richtung beweglicher Boden 26, der mittels einer Feder 25 nach oben gedrückt wird. Dadurch wird gewährleistet, dass sich das oberste Befestigungselement wie z.B. die oberste Radschraube im Bereich der Öffnung 11 befindet und vom Schrauber 3 aus der Öffnung 11 ausgestoßen werden kann.

## Patentansprüche

1. Vorrichtung zum automatischen Wechseln von Fahrzeug- oder Flugzeugrädern (15), umfassend eine mobile Schraubereinheit (2), mit:
- einer Basis, an der mehrere Räder (5) befestigt sind,
- einer Antriebseinheit (17) zum Antreiben der Räder (5),
- einem auf der Basis montierten Schrauber (3) mit einer Klinge (7),
- einer Stelleinrichtung, mit der die Position des Schraubers (3) in horizontaler und vertikaler Richtung relativ zur Basis einstellbar ist,
- einer Kassette (6) zum Aufnehmen von Befestigungselementen (14), mit denen die Fahrzeug- oder Flugzeugräder (15) befestigt sind, wobei die Kassette (6) eine Öffnung (11) aufweist, durch die die Klinge (7) des Schraubers (3) hindurchragt, und die so dimensioniert ist, dass ein Befestigungselement (14) von außen in die Kassette (6) eingeführt oder aus der Kassette (6) ausgestoßen werden kann,
- einer Kamera (8) und einer Bilderkennungssoftware, mit der die Position der Befestigungselemente (14) erkennbar ist, und
- einer Steuerung (4), die dazu eingerichtet ist, den Schrauber (3) anzusteuern und die horizontale sowie vertikale Position des Schraubers (3) relativ zur Basis in den Raumachsen x, y und z einzustellen.

2. Vorrichtung nach Anspruch 1, **dadurch gekennzeichnet, dass** die Stelleinreichtung (19) zum Einstellen der relativen Position des Schraubers (3) mehrere Motor-Getriebe-Einheiten umfasst.

3. Vorrichtung nach Anspruch 1 oder 2, **dadurch gekennzeichnet, dass** die Schraubereinheit (2) eine Vorrichtung zum Fixieren der Schraubereinheit (2) relativ zum Boden aufweist.

4. Vorrichtung nach Anspruch 3, **dadurch gekennzeichnet, dass** die Vorrichtung zum Fixieren der Schraubereinheit (2) einen Arm umfasst, mittels dessen sich die Schraubereinheit an einem Fixpunkt festhalten kann.

5. Vorrichtung nach einem der vorhergehenden Ansprüche, **dadurch gekennzeichnet, dass** an einem Endabschnitt der Klinge (7) eine Haltevorrichtung (20) zum Halten eines Befestigungselements (14) vorgesehen ist.

6. Vorrichtung nach Anspruch 5, **dadurch gekennzeichnet, dass** die Haltevorrichtung (20) ein elastisches Element umfasst, das so ausgelegt ist, dass es über das Befestigungselement (14) gestülpt werden kann.

7. Vorrichtung nach Anspruch 5, **dadurch gekennzeichnet, dass** die Haltevorrichtung (20) eine Klammer umfasst, die das Befestigungselement (14) umgreift.

8. Vorrichtung nach einem der Ansprüche 5 bis 7, **dadurch gekennzeichnet, dass** in der Kassette (6) ein Abstreifer vorgesehen ist, mit dem ein von der Haltevorrichtung (20) gehaltenes Befestigungselement (14) von der Klinge (7) abgestreift werden kann.

9. Vorrichtung nach einem der vorhergehenden Ansprüche, **dadurch gekennzeichnet, dass** ferner ein oder mehrere Wagen (9) zum Transportieren eines Fahrzeug- oder Flugzeugrades (15) vorgesehen sind.

10. Vorrichtung nach Anspruch 9, **dadurch gekennzeichnet, dass** der Wagen (9) eine Vorrichtung zum Drehen des Fahrzeug- oder Flugzeugrades (15) um seine Achse aufweist.

11. Vorrichtung nach einem der vorhergehenden Ansprüche, **dadurch gekennzeichnet, dass** die Stelleinrichtung (19) zum Einstellen der Position des Schraubers (3) mehrere Spindeltriebe umfasst.

12. Vorrichtung nach einem der vorhergehenden Ansprüche, **dadurch gekennzeichnet, dass** die Kassette (6) mehrere übereinander angeordnete Abstandshalter (21) aufweist, die dazu dienen, die Befestigungselemente (14) in einer horizontalen Lage zu halten.

13. Vorrichtung nach Anspruch 9 oder 10, **dadurch gekennzeichnet, dass** der Wagen (9) zwei Arme (12) aufweist, auf denen das Fahrzeug- oder Flugzeugrad (15) aufliegt, wenn es vom Wagen (9) transportiert wird.

14. Vorrichtung nach einem der vorhergehenden Ansprüche, **dadurch gekennzeichnet, dass** eine Radwechseleinheit vorgesehen ist, die dazu ausgelegt ist, ein Fahrzeug- oder Flugzeugrad (15) nach dem Lösen des/der Befestigungselemente (14) von der der Nabe abzunehmen und zur Seite weg zu bewegen, und die im gleichen Zuge das neue Rad an der Nabe positioniert und auf die Nabe setzt.
